# EUROPEAN PATENT APPLICATION

(11) **EP 4 625 228 A1**
(43) Date of publication of application: **01.10.2025**
(21) Application number: 25164797.0
(22) Date of filing: 19.03.2025
(51) Int. Cl.: G06F 21/60, G06F 21/62, G06F 40/20, G06N 20/00, H04L 9/40, H04W 12/08

(54) **AUTOMATIC EFFECTIVE PERMISSIONS DISCOVERY FOR CLOUD RESOURCES**

(30) Priority: 26.03.2024 US 202418617643
(71) Applicant: Microsoft Technology Licensing, LLC, Redmond, WA 98052 (US)
(72) Inventor: MEDINA, Amit Magen, Redmond, 98052 (US); HEN, Idan, Redmond, 98052 (US); ZIV, Lior, Redmond, 98052 (US)
(74) Representative: CMS Cameron McKenna Nabarro Olswang LLP

(57) **Abstract**

Examples analyze effective permissions in a role-based access control system. A prompt is created for a large language model (LLM). The prompt includes a role definition for a role of a role-based access control system, and action definitions. The role definition for the role includes an action and effective permissions text describing a summary of permission limitations provided by the role. The action definitions are provided in a hierarchical format. Query text is added to the prompt. The query text includes a question about effective permissions associated with the role. The prompt is submitted to the LLM, thereby generating response text from the LLM. The response text is displayed to a user.

## Description

### BACKGROUND

Cloud computing platforms provide various services and resources for users and organizations. Some cloud resources are protected by a role-based access control (RBAC) system that defines the permissions that users and groups have on the resources. Permissions are granted or denied by, for example, assigning roles to users and groups, or by directly specifying actions that are allowed or denied on the resources. Actions are hierarchical and granular expressions that represent the operations that can be performed on the resources, such as create, delete, update, configure (e.g., for virtual machines (VMs), networking, or storage resources), and read, write, delete, or backup (e.g., for data resources). Such actions can be included or excluded in roles to configure permissions for a particular customer environment.

### SUMMARY

The disclosed examples are described in detail below with reference to the accompanying drawing figures listed below. The following summary is provided to illustrate some examples disclosed herein. The following is not meant, however, to limit all examples to any particular configuration or sequence of operations.

Example solutions for analyzing effective permissions in a role-based access control system include: creating a prompt for a large language model (LLM), the prompt including a role definition for a role of a role-based access control system, and action definitions, the role definition for the role including an action and effective permissions text describing a summary of permission limitations provided by the role, the action definitions are provided in a hierarchical format and include the action; adding, to the prompt, query text that includes a question about effective permissions associated with the role; submitting the prompt to the LLM, thereby generating response text from the LLM; and causing the response text to be displayed to a user.

### BRIEF DESCRIPTION OF THE DRAWINGS

The disclosed examples are described in detail below with reference to the accompanying drawing figures listed below:
FIG. 1 illustrates an example architecture in which a large language model (LLM) is used to evaluate effective permissions within a cloud service environment;
FIG. 2 is a diagram illustrating an example anatomy of the bespoke prompt that is submitted to the LLM of FIG. 1, along with sources of the various data used to create the prompt;
FIG. 3 is a flowchart illustrating exemplary operations performed by the architecture of FIG. 1 for analyzing effective permissions in a role-based access control system such as the RBAC of the cloud service shown in FIG. 1;
FIG. 4 is a flowchart illustrating exemplary operations performed by the system of FIG. 1 for analyzing effective permissions in a role-based access control system such as shown in the cloud service shown in FIG. 1; and
FIG. 5 is a block diagram of an example computing device (e.g., a computer storage device) for implementing aspects disclosed herein.

Corresponding reference characters indicate corresponding parts throughout the drawings. Any of the drawings may be combined into a single example or embodiment.

### DETAILED DESCRIPTION

Cloud computing environments and their associated access control systems can be complex and tedious for users (e.g., administrators) to evaluate. For example, in role-based access control (RBAC) systems, understanding role definitions and assignments within a particular environment and its particular resource hierarchy structure can be difficult to understand. Effective permissions may vary depending on the source and target resources, the scope and level of the permissions, and the changes in the RBAC system. Manual or rule-based methods of effective permission evaluation and discovery are often prone to error and inconsistency and may not be able to handle the variability and diversity of a complex permission structure.

In some examples, a permissions analytics system is provided that uses large language models (LLMs) to evaluate effective permissions within an RBAC system. More specifically, an example permissions analytics engine allows a user (e.g., a security administrator or access control administrator) to evaluate the effective permissions of a given RBAC system configuration. In some examples, the permissions analytics engine provides a user interface through which the user can access and interact with the analytics engine to evaluate effective permissions of various roles within the RBAC system (e.g., based on current role definitions, or perhaps on a prospective role definition being considered for implementation within the RBAC system).

In examples, the user forms an initial query that includes, for example, some prefix text for the query (e.g., the name of a security principal, the name of a target resource, and the name of an existing role defined in the RBAC system), as well as a natural language query request identifying what the user wishes to know about the given resources or role definition. Based on this initial query, the analytics engine generates a bespoke LLM prompt. This bespoke LLM prompt is created to include both a context section and a user query section. The context section of the prompt provides action definitions defined for a particular RBAC system (e.g., defining actions that can be performed on the various types of resources for a particular cloud tenant), as well as role definitions for several roles defined within the RBAC system. Some of these role definitions provide effective permissions text that describe what effective permissions are provided by the associated role based on what actions are allowed or prohibited by that role. These several roles act as "few-shot" examples for what effective permissions are caused by those particular role configurations, where the actions definitions and hierarchy provide context for the actions identified by the roles.

The user query section allows the user to direct the query by providing user input, such as resources or roles of interest. For example, the user may identify a security principal, a target resource, and a role. In response, the permissions analytics system uses the user inputs to generate query text (e.g., predefined questions about the effective permissions surrounding those roles or resources). This query text is appended to the contextual text and submitted, as a prompt, to the LLM. The LLM uses the action definitions and the few-shot examples to answer the question(s) posed in the query text. In some examples, response text is in the form of a natural language response. The response text is then provided to the user, thereby allowing the user to evaluate effective permissions of the role with respect to the source and target resources.

Examples of the permissions analytics system improve computing system performance during permissions analysis in an RBAC system through use of an LLM to assist with analyzing effective permissions. Creating a prompt for the LLM that includes, as context, example role definitions that have known effective permissions, in conjunction with a list of action definitions, allows the prompt to establish a context within which questions in subsequent query text set up the LLM to be able to more reliably analyze effective permissions. When humans attempt to analyze complex RBAC environments, they are prone to errors, some of which can cause security vulnerabilities (e.g., via erroneously adding too much permission to certain roles) and application outages or user outages (e.g., via removing needed permissions from roles). In examples, these systems and methods enable static experiences that include, for example, attack path analysis and customer exploration of cloud environments (e.g., via submission of user queries regarding their own user accounts, or company permissions checks regarding suspect security principals, resources, or roles), as well as co-piloting and other dynamic experiences on top of cloud data. As such, the example permissions analytics system uses the strength of LLMs to implement a technical solution that provides more reliable analysis of effective permissions in such RBAC systems.

The various examples are described in detail with reference to the accompanying drawings. Wherever preferable, the same reference number is used throughout the drawings to refer to the same or like parts. References made throughout this disclosure relating to specific examples and implementations are provided solely for illustrative purposes but, unless indicated to the contrary, are not meant to limit all examples.

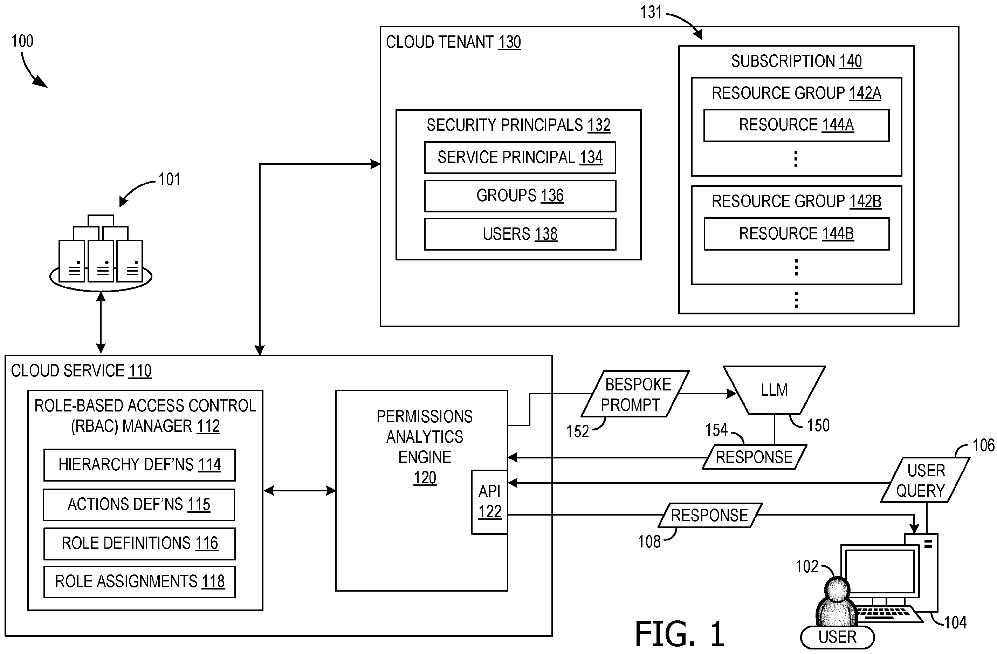

FIG. 1 illustrates an example architecture 100 in which a large language model (LLM) 150 is used to evaluate effective permissions within a cloud service environment. In the example, a cloud service 110 executes on a compute infrastructure 101 to provide various cloud services (e.g., compute, storage, database, networking, and other such services) for various customers. To manage such services, the cloud service 110 provides a role-based access control (RBAC) manager (or just "RBAC") 112 that manages access to various resources available within the cloud service 110 (e.g., through assignments of various users 138 or groups 136 to particular roles via role assignments 118). In examples, a permissions analytics engine 120 is provided within the cloud service 110 to provide effective permissions analytics based on the particular assignments defined within the RBAC 112. These analytics allow users 102, for example, to evaluate effective permissions of the various roles and role assignments, specifically within particular resource hierarchies defined for particular tenants, such as cloud tenant 130. The permissions definitions defined for any particular tenant are often quite complex, and thus can be difficult for humans to manually evaluate. Accordingly, the permissions analytics engine 120 uses the LLM 150 to help the user 102 evaluate effective permissions of the RBAC 112 (e.g., based on current permissions and hierarchy as defined within the RBAC). Such analytics are described in greater detail below.

In examples, the cloud service 110 operates within a multi-tenant environment that serves multiple customers of the tenants. The cloud service 110 is a service available on demand for users through a publicly-accessible network, such as the Internet. A tenant is an organization, entity, business unit within an organization, a group of users within an organization, or the like. A tenant hosts resources for use by its users, such as virtual machines, applications, application programming interfaces (APIs), databases, storage accounts, services, and so forth. As shown in FIG. 1, the tenant 130 contains a subscription 140 having resource groups 142A, 142B, where each resource group 142A, 142B includes one or more resources 144A, 144B, respectively. A subscription is an object that represents a folder where the resources reside. A tenant may have multiple subscriptions. The subscription 140, resource group(s) 142A-142B, and resource(s) 144A-144B thus represent a resource hierarchy 131 under the tenant 130. This resource hierarchy 131 is used by the RBAC 112 to identify various scopes of access to particular resources or groups of resources, as well as particular actions on those particular resources.

The cloud service 110 hosts the subscriptions of the tenants and controls access to the resources contained within a subscription. Access to such resources is provided to various security principals 132 defined for the tenant 130. Security principals 132 can include, for example, users 138 (e.g., individuals within an organization), groups 136 (e.g., groups of users 138), service principals 134 (e.g., entities that represent applications, hosted services, automated tools, or the like), and perhaps other entities such as managed identities (not separately shown). As such, security principals 132 represent entities, or groups of entities, that are assigned to access particular resources within the cloud environment, as well as to perform particular actions defined for those resources.

The RBAC 112 manages access between the security principals 132 and the resources defined under the tenant 130 using role definitions 116 and role assignments 118. More specifically, a role definition (or just "role") 116 is a set of actions or operations that may be performed (or prohibited) under that role 116. **In** other words, when a particular role 116 is assigned to a particular security principal 132 (e.g., a user 138), that role 116 limits what actions can and cannot be performed by that security principal 132. **In** some examples, the roles 116 include allowed actions (e.g., an inclusion list, 'Actions') and/or prohibited actions (e.g., an exclusion list, 'NotActions'), and may also include allowed and/or prohibited data actions (actions specific to data type resources, e.g., 'DataActions' and 'NotDataActions', respectively). Each security principal 132 can be assigned to any number of roles 116, with the permissions being allowed (or prohibited) individually by each particular assigned role 116 (e.g., effectively providing a union of the allowed and prohibited actions from all of the assigned roles).

**In** the example, the action set for any particular role definition 116 is a list of one or more actions that are available within the environment, such as, for example, create, delete, update, configure (e.g., for virtual machines (VMs), networking, or storage resources), and read, write, delete, or backup (e.g., for data resources). The RBAC 112 maintains a list of actions definitions 115 for the cloud tenant 130. **In** some examples, each action definition 115 is defined in an action hierarchy that includes a tenant identifier (e.g., <company>), a service identifier (e.g., <service>), a resource type (e.g., <resource-type>), and an action (e.g., <action verb>). As such, various services can offer different types of resources, and each type of resource can provide various actions specific to that resource type. **In** some examples, services, resource types, and actions can be divided into additional layers, such as sub-services, sub-resource-types, or sub-actions of other services, resource types, or actions.

For example, the cloud service 110 hosts 'Company' as tenant 130 and provides three different types of services, namely compute services (e.g., virtual machines), web services, and database services. In examples, the RBAC 112 defines actions using a template of "<company>.<service>/<resource-type>/<action verb>" for each of the action definitions 115. As mentioned above, each of the services defines different types of resources. For example, the compute services provide a "virtualMachines" type resource, the web service provides a "sites" type resource, and the storage service provides a "storageAccounts" type resource. Further, the different types of resources can define different types of actions that may be permissioned for that resource. For example, a "virtualMachines" type resource has actions such as "start", "shutdown", "deallocate", or the like. A "sites" type resource may have actions such as "start/action", "stop/action", and "config/write" (e.g., where the <action verb> contains a slash-separated hierarchy of actions in these examples). In some examples, the <resource type> contains a nested hierarchy of resource types underneath certain resource types. For example, the "storageAccounts" type resource includes a "blobServices/containers" type resource, and that "storageAccounts/blobServices/containers" type resource defines actions such as "read", "write", and "delete". As such, in this example, the actions definitions 115 include:

**Table 1 - Example Actions List**

| |
|---|
| 'Company.Compute/virtualMachines/start' |
| 'Company.Compute/virtualMachines/shutdown' |
| 'Company.Compute/virtualMachines/shutdown' |
| 'Company.Web/site/start/action' |
| 'Company.Web/site/stop/action' |
| 'Company.Web/site/config/write' |
| 'Company.Storage/storageAccounts/blob Services/containers/read' |
| 'Company.Storage/storageAccounts/blob Services/containers/write' |
| 'Company.Storage/storageAccounts/blobServices/containers/delete' |

As such, the actions definitions 115 represents a list of all actions that can be performed on any of the resources 144A-144B defined for the tenant 130 (e.g., under subscriptions 140, resource groups 142A-142B), each of which has a defined resource type that is used to identify relevant actions for that resource 144A, 144B.

To enable access to resources 144A-144B and their associated actions within the environment, role assignments 118 are used to assign roles 116 to particular security principals 132. A role assignment 118, in examples, identifies one or more security principals 132, one or more roles 116, and a resource scope. The resource scope identifies a subset of resources available within the tenant 130 (e.g., within the subscription 140). In some examples, the resource scope is identified at some level of the resource hierarchy 131 (e.g., as some particular resource 144A-144B, resource group 142A-142B, or subscription 140, as defined in hierarchy definitions 114). As such, when a resource scope is defined as some particular resource group 142A-142B or subscription 140 level, that resource scope thus includes any of the resources 144A-144B defined beneath that node in the resource hierarchy 131. Thus, for any given role assignment 118, the identified set of security principals 132 (e.g., the identified user(s) 138, group(s), and/or service principal(s) 134) are permissioned to perform (or excluded from performing) the actions included in the identified roles 116 on any of the resources defined by the resource scope.

As such, roles 116 and role assignments 118 provide administrators with a configuration tool that allows sets of actions to be predefined for sets of resources and assigned to particular security principals 132. When a particular action is attempted by a particular security principal 132 on a particular resource 144A-144B within the tenant 130, the RBAC 112 uses the role assignments 118 to determine whether or not that principal 132 is permissioned to perform that particular action on that particular resource.

As an environment such as tenant 130 grows, managing larger environments can become quite complex. For example, the resource hierarchy 131 under the various subscriptions 140 of the tenant 130 grows as additional applications are deployed, many virtual machines are created, storage resources are created, and the like. Larger organizations sometimes see large numbers of users 138, as well as groups 136 of users 138, and service principals 134. Defining roles 116 for such large organizations can lead to large and complex role assignments 118. Between all the resources in the resource hierarchy 131, all the security principals 132, the actions definitions 115, and all the roles 116 used in the environment, it can be difficult for administrators (e.g., user 102) to evaluate the effective permissions within that environment.

In the example, the permissions analytics engine 120 is provided as a tool for analyzing effective permissions within this environment. The permissions analytics engine 120 uses the LLM 150 to analyze aspects of permissions managed by the RBAC 112. More specifically, during operation, the permissions analytics engine 120 receives a user query 106 from a user computing device 104 (e.g., via an API 122 or the like). The user query 106 includes aspects of an inquiry into permissions that is of interest to the user 102. The user query 106 can include, for example, text or other user input that identifies aspects of the inquiry, such as a role 116, resource (e.g., resource 144A-144B, resource group 142A-142B, subscription 140), and/or security principal 132 of interest to the user 102. The user query 106 can also include query text provided by the user (e.g., "What can Subscription A do with Storage account B?"). In some examples, the permissions analytics engine 120 provides a user interface (UI) that allows the user 102 to select roles 116, resources, and/or security principals 132 of interest, and/or questions of interest (e.g., as selection(s) of predefined question(s)).

The permissions analytics engine 120 uses the input data provided by the user query 106 to create a bespoke prompt 152 that, when submitted to the LLM 150, causes the LLM 150 to analyze the data provided by the prompt 152 and generate an evaluation to the inquiry (e.g., as response 154 back to the permissions analytics engine 120). In examples, the bespoke prompt 152 is configured as a few-shot prompt that provides one or more sample role definitions 116, where each sample role also includes a text-based description of the effective permissions provided by that sample role (e.g., as predetermined prior to the example query 106). These few "shots" (e.g., the sample roles and effective permissions) function to inform the LLM 150 as to how to evaluate effective permissions given the particular sample role definitions 116. Further, in examples, the prompt 152 also includes the action hierarchy for the tenant 130 (e.g., the actions definitions 115). This actions hierarchy provides as additional context to queries submitted to the LLM 150, acting to inform the LLM 150 of what actions are defined for which particular types of resources. More specifically, the action definitions 115 in combination with the few-shot samples are used as starting context for the queries submitted to the LLM 150 for this user query 106.

In addition to the action definitions 115 and few-shot samples, the prompt 152 also includes additional query text based on the user query 106. For example, presume the user query 106 identifies a security principal ("<security principal>", e.g., "Security Principal A", a user 138, group 136, service principal 134, as defined in security principals 132 for the tenant 130) and a target resource of interest to the user 102 ("<target resource>", e.g., "Storage account B", a particular storage account resource 144A within the resource group 142A), as well as optionally a role definition 116 (e.g., an existing role 116 or a definition of a prospective role). These user inputs from the user query 106 are used to generate query text that is appended to the prompt 152.

More specifically, in addition to the context portion of the prompt 152 above, the permissions analytics engine 120 also creates and appends query text to the prompt 152. The query text represents a request for specific permissions analytics based on the context. Continuing the above example, the user 102 wishes to see effective permissions details to the <target resource> for the <security principal>, and perhaps given the <role> (e.g., as a presumption that the <security principal>, "Security Principal A", is assigned to the <role>). As such, consider the query text of: "What can <security principal> do with <target resource>?" (e.g., where the angle bracketed inputs are presumed to be populated into the query text). The permissions analytics engine 120 appends this query text to the prompt 152 and submits this entire prompt 152 to the LLM 150. Based on the entire context in conjunction with the particular query text, the LLM 150 thus generates a response 154 such as, for example: "<security principal> can <effective permissions> within <target resource>." This response 154 output from the LLM 150 is then sent back to the user computing device 104 as response 108, thus allowing the user 102 to evaluate whether the effective permissions between the <security principal> and the <target resource> are as anticipated.

In some examples, additional or different queries (e.g., different or additional query text) may be included in the prompt 152. For example, the permissions analytics engine 120 may be configured to submit several prompts 152 to the LLM 150, including the above example query text, as well as query text "Can <security principal> perform <action_1> or <action_2> on <target resource>?", and "Can <security principal> read the role assignments and role definitions of <target resource>?".

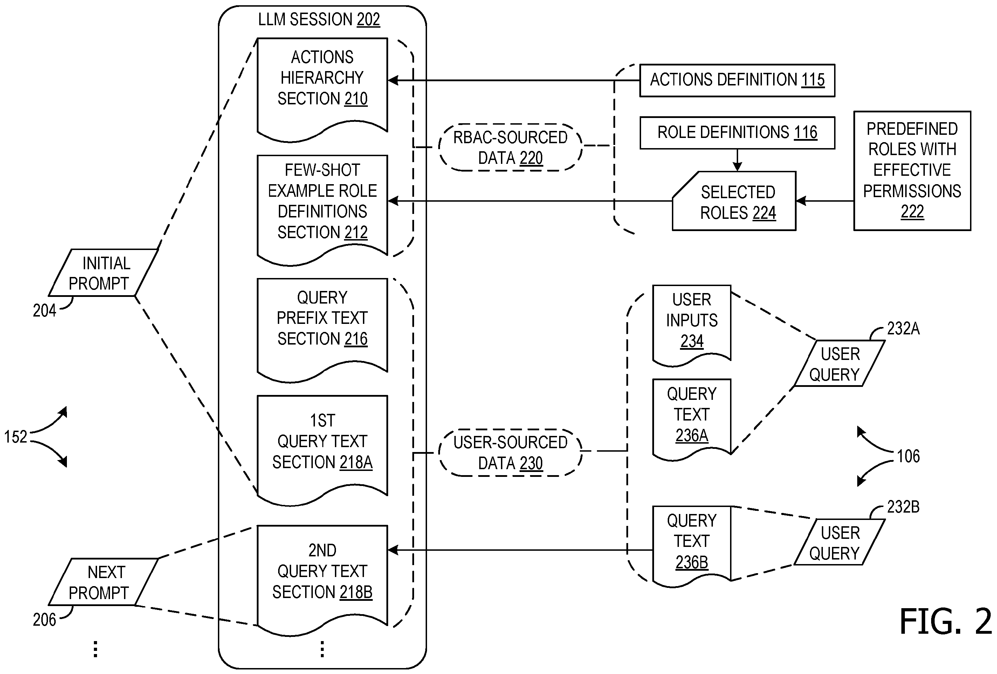

While the above example provides particular contextual text and query text to the prompt(s) 152, it should be understood that the permissions analytics engine 120 supports several different types of user queries 106, each of which may impact the contextual text and query text that is used to create the prompt(s) 152. FIG. 2 illustrates the anatomy of the bespoke prompt 152 and provides additional example types of user queries 106 and the associated contextual text and query text that is used to create the bespoke prompt 152 for each type of user query 106.

Additionally, while the above example describes several preconfigured templates of query text that are automatically populated by the permissions analytics engine 120 before submission of the prompt(s) 152 to the LLM 150, the permissions analytics engine 120 may, additionally or alternatively, allow the user 102 to input query text that is used for the prompt(s) 152 (e.g., asking particular questions formed by the user 102 in lieu of or in addition to any preconfigured queries provided automatically by the permissions analytics engine 120). In some examples, the permissions analytics engine 120 allows the user 102 to select from a predefined list of queries.

Further, while the examples described herein provide particular schemes for defining or including actions (e.g., as 'Actions', 'NotActions', 'DataActions', and 'NotDataActions' using the example slash-separated actions hierarchy), grouping actions (e.g., within roles), assigning actions (e.g., via role assignments to security principals 132), organizing resources (e.g., as the resource hierarchy 131), and permissioning actions to particular resources (e.g., via scoping of role assignments via the resource hierarchy), it should be understood that other schemes may be used with the permissions analytics engine 120.

FIG. 2 is a diagram illustrating an example anatomy of the bespoke prompt 152 that is submitted to the LLM 150 of FIG. 1, along with sources of the various data used to create the prompt 152. In the example, FIG. 2 includes an initial prompt 204 and a next prompt 206, each of which are bespoke prompts 152 as shown in FIG. 1. The initial prompt 204 represents a first bespoke prompt 152 that is generated for a particular user query 106, and the next prompt 206 represents a second bespoke prompt 152 that is generated as a part of the same user query 106 and is submitted to the LLM 150 after the first bespoke prompt 152. In this example, these prompts 204, 206 are presumed to be created by the permissions analytics engine 120 and submitted to the LLM 150 in response to a single user query 106.

Further, in this example, it is presumed that the user query 106 provides a <security principal> of "Security Principal A", a <target resource> of "Storage account B", and a <role> of "Storage Blob Data Contributor" as input parameters. This is one example type of user query 106 that allows the user 102 to evaluate the effective permissions between a <security principal> and a <target resource> based on a particular <role>. For example, the user 102 may be performing an attack path analysis while researching a suspected security vulnerability or a known security incident (e.g., involving the <security principal>, the <target resource>, and/or the <role>). It is also presumed that the role of 'Storage Blob Data Contributor' is already defined (e.g., within the role definitions 116) as:
Role: Storage Blob Data Contributor
Actions: Company.Storage/storageAccounts/blobServices/containers/read,
   Company.Storage/storageAccounts/blobServices/containers/write,
   Company.Storage/storageAccounts/blobServices/containers/delete
NotActions: None
DataActions: Company.Storage/storageAccounts/blobServices/containers/blobs/*
NotDataActions: None
Effective permissions: Read, write, and delete access to blob containers and blobs within storage accounts
In this example role definition, the 'Actions' and 'DataActions' define allowed actions, whereas the 'NotActions' and 'NotDataActions' define actions that are prohibited. The 'Effective permissions' field is text that describes, in descriptive text, a summary of the permissions that are allowed or denied by this role. While the example role definitions 116 provided herein show only allowed and excluded actions, as well as possibly effective permissions, it should be understood that the RBAC 112 may provide many other possible parameters with any particular role definition 116.

In the example, the permissions analytics engine 120 creates the initial prompt 204 to include an actions hierarchy section 210, a few-shot example role definitions section 212, a query prefix text section 216, and a first query text section 218A. Sections 210, 212 operate as contextual text for the prompts 152, 204, 206 and are identified on FIG. 2 as RBAC-sourced data 220 inasmuch as the data used to populate these sections 210, 212 comes primarily from the RBAC 112. Sections 216, 218A, 218B operate as query refinement text for the prompts 152, 204, 206 and are identified on FIG. 2 as user-sourced data 230 because the data used to populate these sections 216, 218A, 218B are determined based on the user query 106.

In the example, the actions hierarchy section 210 is created with some or all of the actions definitions 115 defined in the RBAC 112 (e.g., for this particular tenant 130, for the entirety of the cloud service 110, or at some other scope, as determined based on the user 102 submitting the user query 106). In this example, presume that the actions hierarchy section 210 includes at least all of the actions defined in Table 1, above, each of which is captured from the actions definitions 115 for the tenant 130 based on the identity of the user 102.

The few-shot example role definitions section 212 includes several role definitions and their associated effective permissions. As discussed above, these few-shot examples include both the actions allowed or excluded for the particular role (e.g., 'Actions', 'NotActions', 'DataActions', and 'NotDataActions' sections), as well as 'effective permissions' text that summarizes what actions are allowed and excluded by this role. Effective permissions text is a narrative summary describing the scope of actions allowed or denied in light of the actions and exclusions defined by the role. In other words, the effective permissions text is a natural language description of the permissions limitations provided by the role (e.g., what actions are allowed or denied on what resources under that particular role). While the RBAC manager 112, for example, uses the actions and exclusions definitions included in the role definition (e.g., the Actions, NotActions, DataActions, and NotDataActions) to evaluate and gatekeep which security principals 132 are allowed to perform what operations on the various resources, the effective permissions text provides what should be a narrative summary of the permissions limitations (e.g., the actions and exclusions) for that role. As such, the effective permissions text is not used to evaluate the allowance or prohibition of actions, but rather is available as a user-friendly, read-only tool.

In examples, the permissions analytics engine 120 identifies several selected roles 224 from either or both of the role definitions 116 and a set of predefined roles with effective permissions 222, at least some of which include 'effective permissions' text. For example, and in addition to the role of 'Storage Blob Data Contributor' identified above, presume the RBAC 112 is also configured with the following predefined roles with effective permissions 222:
Role: Owner
Actions: */*
NotActions: None
DataActions: */*
NotDataActions: None
Effective permissions: All actions and dataActions on all resources

Role: Contributor
Actions: */*
NotActions: Company.Authorization/*
DataActions: */*
NotDataActions: None
Effective permissions: All actions and dataActions on all resources, except for managing role assignments and role definitions

Role: Reader
Actions: Company.Authorization/*/read, */read
NotActions: None
DataActions: None
NotDataActions: None
Effective permissions: Read-only access to all resources and role assignments

The above predefined roles with effective permissions 222 include an 'Owner' role, a 'Contributor' role, and a 'Reader' role. The 'Owner' role is defined to allow all actions and dataActions (e.g., based on the "*/*" action definition for both) and without any prohibitions. Such a role definition means that the 'Owner' role has access to all actions on resources of the resource hierarchy 131 and, as such, the 'Effective permissions' text for that role reads "All actions and dataActions on all resources." The 'Contributor' role and the 'Reader' role define some actions (and prohibitions) on an "Authorization" service, which is a service that controls resource access within the cloud service 110 (e.g., via roles 116 and role assignments 118). The "Authorization" service thus defines a set of actions that are used to control who can perform administrative actions (e.g., who can read/create/edit/delete the roles 116 and role assignments 118). In this example, the 'Contributor' role is configured to perform all actions and dataActions on all resources, but is prohibited from all "Authorization" actions (e.g., based on the "NotAction: Company.Authorization/*" portion). The 'Reader' role is only permitted to perform "read" type actions for any of the resource types under the "Authorization" service (e.g., based on the "Action: Company.Authorization/*/read" portion).

In examples, the permissions analytics engine 120 is configured with predefined roles with effective permissions 222 that are used as the selected roles 224, and any or all of these roles are used as selected roles 224. Further, in some examples, the permissions analytics engine 120 adds one or more additional roles to the selected roles 224 from the roles definitions 116, or from a role definition provided in the user query 106, even roles without 'effective permissions' text. For example, when a particular user query 106 identifies a particular role 116 that is not within the set of predefined roles with effective permissions 222, the role definition for that role is included in the selected roles 224. While the 'effective permissions' for that role 116 may not be predefined, the LLM 150 can derive the effective permissions for that role 116 based on the other predefined roles with effective permissions, and based on the action definitions defined for that role 116. In some examples, the permissions analytics engine 120 may include any or all predefined roles from the roles definitions 116 to include in the selected roles 224 (e.g., built-in roles 116, custom roles 116). In some examples, the permissions analytics engine 120 may generate a random sampling of predefined roles from the roles definitions 116 to include in the selected roles 224 (e.g., ten random predefined role definitions 116). In some examples, the permissions analytics engine 120 may sample role definitions 116 for inclusion in the selected roles 224 based on action verbs and/or resources used by the roles 116 (e.g., favoring inclusion of a variety of action verbs or resources).

For example, presume that the 'Storage Blob Data Contributor' role is defined in the role definitions 116 but does not include the 'effective permissions' text shown above. In other words, while the actions definitions for this role are known, the effective permissions for that role are unknown. As such, the role definition 116 for this role is still included in the prompt 152, 204, 206, just without 'effective permissions' text. The LLM 150 uses the other samples from this section 212 in conjunction with the actions defined for the 'Storage Blob Data Contributor' and the actions hierarchy to determine the effective permissions for that role 116.

In the example, the actions hierarchy section 210 and the few-shot example role definitions section 212 represent the initial context provided in the prompt 152, 204, 206. The remainder of the prompt 152, 204, 206 is determined based on the user query 106 (e.g., as user-sourced data 230). In the example, a first user query 232A and a second user query 232B represent two distinct user queries 106 submitted by the user 106 during the same LLM session 202 (e.g., during the same investigation). For example, the first user query 232A identifies the example <security principal>, <target resource>, and <role> identified above (e.g., "Security Principal A", "Storage Account B", and "Storage Blob Data Contributor", respectively). This data is identified as user inputs 234 in the user query 106, 232A. In addition, the user 102 also provides query text 236A representing what information the user 102 wishes to ask about, such as, for example, "Can Security Principal A create or delete Storage Account B?" This query text 236A is included as the first query text section 218A in the initial prompt 152, 204.

As such, with the initial prompt 204 created, the permissions analytics engine 120 submits the initial prompt 204 to the LLM 150 for processing, receiving response 154 as generated by the LLM 150. For example, the example query above results in the response text: "No, Security Principal A cannot create or delete Storage Account B, because those actions are not included in the Storage Blob Data Contributor role." These results become a part of the LLM session 202 in this example, and are also sent back to the user computing device 104 as response 108.

Additionally, in some situations, the user 102 may wish to submit additional inquiries pursuant to this example situation. As such, in some examples, the permissions analytics engine 120 allows the user 102 to submit one or more additional queries (e.g., represented here as user query 232B), in which additional query text 236B can be provided by the user 102. For example, presume the user 102 asks a follow-up question of: "Can Subscription A read the role assignments and role definitions of Storage Account B?" This additional query text 236B is included as second query text section 218B in next prompt 206 and is submitted to the LLM 150 in the same LLM session 202. As such, the LLM 150 response with "Yes, Subscription A can read the role assignments and role definitions of Storage Account B, because those actions are included in the Reader role, which is inherited by the Storage Blob Data Contributor role."

In some examples, the permissions analytics engine 120 causes a selection of options for query text 236A, 236B to be displayed to the user 102, allowing the user 102 to select which query text 236A, 236B to use, and which user inputs 234 to use (e.g., source/target resources, roles 116). In some examples, the permissions analytics engine 120 automatically adds the query text 236A, 236B to the query text sections 218A, 218B from a list of one or more predefined query text templates. For example, in some query types, the permissions analytics engine 120 stores query text templates of:
"What can <security principal> do with <target resource>?"
"Can <security principal> perform <action(s)> on <target resource>?"
"Can <security principal> read the role assignments and role definitions of <target resource>?"
As such, the permissions analytics engine 120 may automatically enter each of these as query text 236 A, 236B of one or more query text sections 218, automatically entering multiple prompts 152, 204, 206 to the LLM 150 and returning multiple responses 108 to the user computing device 104.

In the example, the prompts 204, 206 are submitted to the LLM 150 within a single LLM session 202 where, for example, all of the context text (e.g., actions hierarchy section 210, few-shot example role definitions section 212), query text (e.g., query prefix text section 216, first query text section 218A), and response text of the initial prompt 204 (not shown in FIG. 2) exist within the LLM session 202 (e.g., thus acting as existing context) when the second query text section 218B is submitted as the next prompt 206 within the LLM session 202. In other examples, a new session 202 may be created for each individual prompt 204, 206. In such an example, the next prompt 206 is created to include the actions hierarchy section 210, the few-shot example role definitions section 212, optionally some query prefix text section 216, and the second query text section 218B.

In some examples, preamble text is included before any one of the sections 210, 212, 216, 218A, 218B to help the LLM 150 generate more accurate output. For example, preamble text is added to the beginning of the actions hierarchy section 210, such as: "The following list of actions are defined for use:" or "The following Actions are defined in the form <Company>.<Service>/<resource-type>/<action verb>." Such preamble text may help the LLM 150 generate more accurate responses. Preamble text for the few-shot example role definitions section 212 can include: "The following are example role definitions:" or "The following role definitions use Actions from the list of actions." Preamble text for the query text sections 218 can include, for example: "Answer the following question based on the example role definitions" or "Presume that <security entity> is assigned to the role <role>, answer the following question:".

While the above example inquiry identifies a <security principal>, a <target resource>, and a <role> as user inputs 234, it should be understood that the permissions analytics engine 120 is configured to perform various different types of permissions inquiries.

In one example, the permissions analytics engine 120 is configured to determine the 'effective permissions' of a particular role given a role definition 116 for that role (e.g., a list of Actions, NotActions, DataActions, and NotDataActions). In some examples, the user 102 selects an existing (e.g., predefined) role from the role definitions 116 (e.g., thus identifying the set of actions for the role). In other examples, the user 102 enters the list of actions for the role (e.g., selecting from a list of actions from the actions definitions 115, manually entering the actions definitions for each actions section of the role, or the like). For such inquiries, the query prefix text section 216 is added to the prompt 152, 204, 206 as: "Presume a new role named <role> is defined as <actions list>." As such, this example query prefix text section 216 acts as the role definition 116 for this new role in these prompts 152. Accordingly, the query text section(s) 218A, 218B are added to the prompt(s) 152, 204, 206, as described above, thus allowing the user 102 to evaluate aspects of a new role definition. In some examples, the query text 236A, 236B includes: "What is the effective permissions of the role <role>?" As such, the LLM 150 generates a text description of the effective permissions of this new <role>, which may be stored as the 'effective permissions' field for that <role>.

In some examples, such as during an attack path analysis, after receiving and viewing the response 108 to the user query 106, the user 102 may perform a configuration change via the RBAC manager 112 in response to the effective permissions analysis shown in the response 108. For example, the user 102 may, in response, change the configuration of a role definition 116 (e.g., adding, deleting, or modifying allowed or prohibited actions or dataActions for a given <role>), change a role assignment for the <security principal>, or the like.

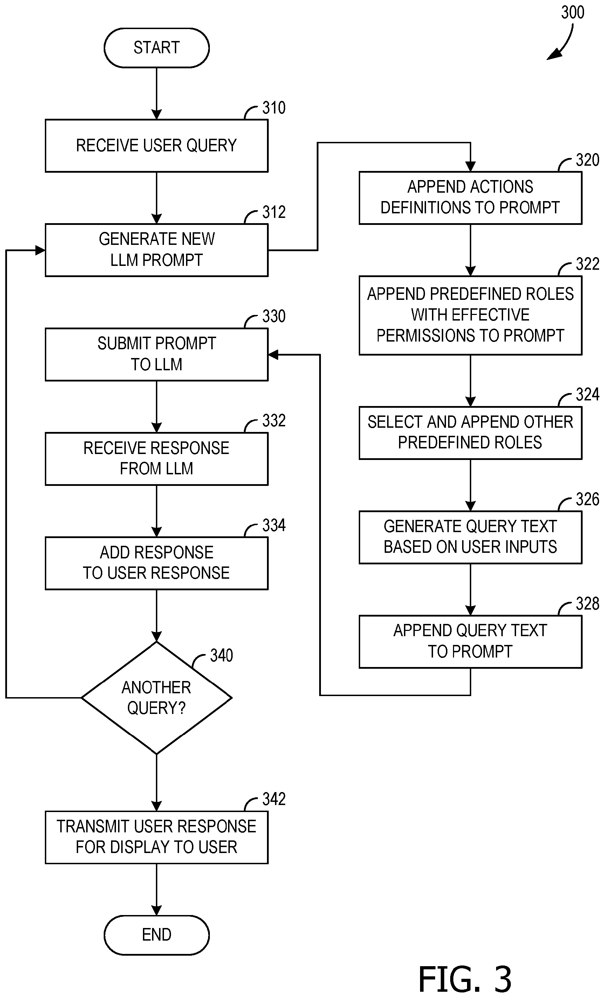

FIG. 3 is a flowchart 300 illustrating exemplary operations performed by the architecture 100 of FIG. 1 for analyzing effective permissions in a role-based access control system such as the RBAC 112 of the cloud service 110 shown in FIG. 1. In examples, the operations are performed by the permissions analytics engine 120 using the LLM 150. At operation 310, the permissions analytics engine 120 receives a user query (e.g., the user query 106 of FIG. 1) from the user computing device 104. This user query 106, in some examples, identifies one or more of a security principal 132, a target resource (e.g., a resource 144, resource group 142, subscription 140, or the like from the resource hierarchy 131 of a tenant 130), and a role definition (e.g., a predefined role 116, attributes of a prospective role, or the like).

In the example, at operation 312, the permissions analytics engine 120 generates a new LLM prompt (e.g., prompt 152, 204, 206 shown in FIG. 1 and FIG. 2) for a large language model (e.g., LLM 150 shown in FIG. 1). Generating the new LLM prompt 204 includes creating an initial (e.g., blank) prompt and appending various components to the prompt, such as shown and described in FIG. 2 (e.g., sections 210-218). More specifically, in this example, the permissions analytics engine 120 appends action definitions (e.g., action definitions 115) to the prompt at operation 320. These action definitions 115 include any or all of the action definitions 115 defined for the tenant 130 associated with the user query 106, and/or any or all of the action definitions 115 defined for the cloud service 110. At operation 322, the permissions analytics engine 120 appends predefined roles with effective permissions 222 to the prompt 204. At operation 324, in some examples, the permissions analytics engine 120 selects and appends one or more other predefined role definitions (e.g., from the role definitions 116) to the prompt 204. These other role definitions can include, for example, a role definition 116 for a <role> identified in the user query 106 (e.g., a definition 116 for an existing role selected by the user 102), attributes of a <role> included in the user query 106 (e.g., allowed and excluded data actions provided by the user 102 for a prospective role, one not yet defined), and/or some sampled subset of existing roles already defined in role definitions 116. Each of these appended portions may be similar to the sections 210, 212 shown and described in relation to FIG. 2.

At operation 326, in the example, the permissions analytics engine 120 also generates query text based on aspects of the user query 106 (e.g., as in sections 216, 218 of FIG. 2). In examples, this query text includes one or more predefined queries that are populated with user inputs 234 (e.g., using <security principal>, <target resource>, and/or <role> identified in the user query 106), and/or specific input queries provided by the user 102 (e.g., query text 236A). At operation 328, the permissions analytics engine 120 appends this query text to the prompt 204.

In the example, the permissions analytics engine 120 then submits this prompt 204 to the LLM 150 for processing at operation 330. At operation 332, the permissions analytics engine 120 receives a response (e.g., response 154) from the LLM 150. This response includes output generated by the LLM 150 based on the input prompt 204 (e.g., an answer to a query about the effective permissions of some <security principal> with regard to some <target resource>). At operation 334, the permissions analytics engine 120 adds this response to a user response (e.g., response 108). At test 340, if another LLM query is configured to be performed to respond to this user query 106, the permissions analytics engine 120 returns to operation 312 and generates a new LLM prompt (as described above), adding that LLM response to the user response again at operation 334. Once all LLM queries are complete at test 340, the permissions analytics engine 120 transmits the user response to the user computing device 104 at operation 342, thus causing the user computing device 104 to display the LLM output(s) to the user 102.

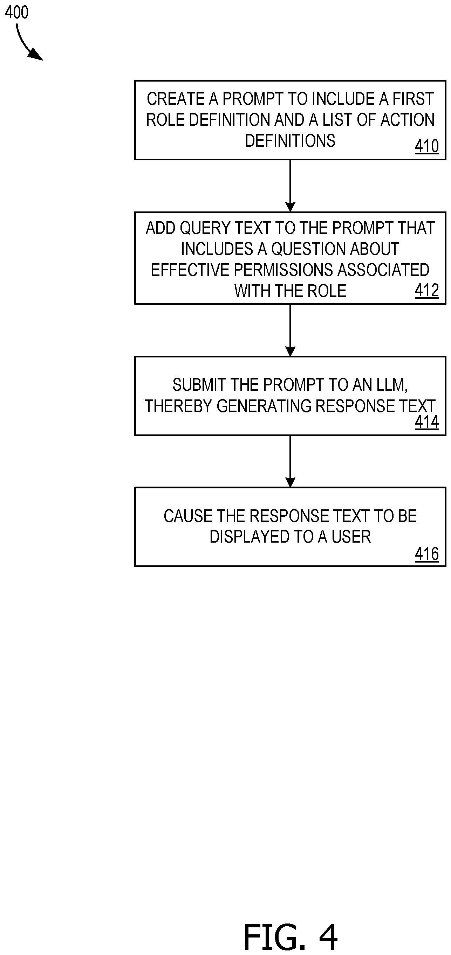

FIG. 4 is a flowchart 400 illustrating exemplary operations performed by the architecture 100 of FIG. 1 for analyzing effective permissions in a role-based access control system such as the RBAC 112 of the cloud service 110 shown in FIG. 1. In examples, the operations are performed by the permissions analytics engine 120 using the LLM 150. At operation 410, the permissions analytics engine 120 creates a prompt (e.g., prompt 152, 204, 206) for a large language model (e.g., LLM 150), the prompt including (A) a first role definition (e.g., role definition 116) for a role of a role-based access control system (e.g., RBAC 112) and (B) a list of action definitions (e.g., action definitions 115). The first role definition for the role including a first action and effective permissions text describing a summary of permission limitations provided by the role. Each action in the list of action definitions is provided in a hierarchical format, the list of action definitions including the first action. In some examples, the hierarchical format of the list of actions includes at least a resource type portion and an action verb portion. The first action identifies a first resource type and a first action verb. In some examples, the first role definition further includes a list of allowed actions and a list of prohibited actions.

At operation 412, in the example, the permissions analytics engine 120 adds, to the prompt, query text (e.g., query text 236A, 236B) that includes a question about effective permissions associated with the role. At operation 414, the permissions analytics engine 120 submits the prompt to the LLM, thereby generating response text from the LLM (e.g., response 154). At operation 416, the permissions analytics engine 120 causes the response text to be displayed to a user (e.g., user 102, via user computing device 104).

**In** some examples, the permissions analytics engine 120 also receives user input (e.g., user inputs 234) identifying a security principal and a target resource, and creates the query text by populating a preconfigured query text template with the security principal and the target resource. **In** some examples, the permissions analytics engine 120 also stores a plurality of example role definitions (e.g., predefined roles with effective permissions 222) including the first role definition. Each example role definition of the plurality of example role definitions includes one or more permitted actions from the list of action definitions and associated effective permissions text. Creating the prompt further includes adding the plurality of example role definitions to the prompt.

**In** some examples, the permissions analytics engine 120 also receives user input identifying another role definition. The other role definition includes a second action and does not include effective permissions text. The permissions analytics engine 120 submits a second prompt (e.g., next prompt 206) to the LLM. The second prompt includes the other role definition and second query text that describes a question referencing the other role. **In** some examples, the permissions analytics engine 120 also receives, from the role-based access control system, the list of action definitions.

### Additional Examples

Clause A: An example permissions analytics system for analyzing effective permissions comprises: a processor; and a computer-readable medium storing instructions that are operative upon execution by the processor to: create a prompt for a large language model (LLM), the prompt including (A) a first role definition for a role of a role-based access control system and (B) action definitions, the first role definition for the role including an action and effective permissions text describing a summary of permission limitations provided by the role, the action definitions being provided in a hierarchical format, the action definitions including the action; append, onto the prompt, query text that describes a question referencing the role; submit the prompt to the LLM, thereby generating response text from the LLM; and cause the response text to be displayed to a user.

Clause B: The permissions analytics system of clause A, wherein the instructions are further operative to: receive user input identifying a security principal and a target resource; and create the query text by populating a preconfigured query text template with the security principal and the target resource.

Clause C: The permissions analytics system of clause A or clause B, wherein the hierarchical format of the action definitions includes a resource type portion and an action verb portion, wherein the action identifies a resource type and an action verb.

Clause D: The permissions analytics system of any of clauses A to C, wherein the computer-readable medium further stores an example role definition including the role definition, the example role definition including a permitted action from the action definitions and associated effective permissions text, wherein creating the prompt further includes adding the example role definition to the prompt.

Clause E: The permissions analytics system of any of clauses A to D, wherein the instructions are further operative to: receive user input identifying another role definition, the other role definition includes another action and does not include effective permissions text; and submit another prompt to the LLM, the other prompt including the other role definition and other query text that describes a question referencing the other role.

Clause F: The permissions analytics system of any of clauses A to E, wherein the role definition further includes an allowed action and a prohibited action.

Clause G: The permissions analytics system of any of clauses A to F, wherein the instructions are further operative to request, from the role-based access control system, the action definitions.

Clause H: An example method for analyzing effective permissions in a role-based access control system comprises: creating a prompt for a large language model (LLM), the prompt including (A) a first role definition for a role of a role-based access control system and (B) action definitions, the first role definition for the role including an action and effective permissions text describing a summary of permission limitations provided by the role, the action definitions being provided in a hierarchical format and including the action; adding, to the prompt, query text that includes a question about effective permissions associated with the role; submitting the prompt to the LLM, thereby generating response text from the LLM; and causing the response text to be displayed to a user.

Clause I: The method of clause H, further comprising: receiving user input identifying a security principal and a target resource; and creating the query text by populating a preconfigured query text template with the security principal and the target resource.

Clause J: The method of clause H or clause I, wherein the hierarchical format of the action definitions includes a resource type portion and an action verb portion, wherein the action identifies a resource type and an action verb.

Clause K: The method of any of clauses H to J, further comprising storing an example role definition including the role definition, the example role definition including a permitted action from the action definitions and associated effective permissions text, wherein creating the prompt further includes adding the example role definition to the prompt.

Clause L: The method of any of clauses H to K, further comprising: receiving user input identifying another role definition, the other role definition includes another action and does not include effective permissions text; and submitting another prompt to the LLM, the other prompt including the other role definition and other query text that describes a question referencing the other role.

Clause M: The method of any of clauses H to L, wherein the role definition further includes an allowed action and a prohibited action.

Clause N: The method of any of clauses H to M, further comprising receiving, from the role-based access control system, the action definitions.

Clause O: An example computer storage device has computer-executable instructions stored thereon, which, on execution by a computer, cause the computer to perform operations comprising: creating a prompt for a large language model (LLM), the prompt including (A) a first role definition for a role of a role-based access control system and (B) action definitions, the first role definition for the role including an action and effective permissions text describing a summary of permission limitations provided by the role, the action definitions being provided in a hierarchical format and including the action; adding, to the prompt, query text that includes a question about effective permissions associated with the role; submitting the prompt to the LLM, thereby generating response text from the LLM; and causing the response text to be displayed to a user.

Clause P: The computer storage device of clause O, the operations further comprising: receiving user input identifying a security principal and a target resource; and creating the query text by populating a preconfigured query text template with the security principal and the target resource.

Clause Q: The computer storage device of clause O or clause P, wherein the hierarchical format of the action definitions includes a resource type portion and an action verb portion, wherein the action identifies a resource type and an action verb.

Clause R: The computer storage device of any of clauses O to Q, the operations further comprising storing an example role definition including the role definition, the example role definition including a permitted action from the action definitions and associated effective permissions text, wherein creating the prompt further includes adding the example role definition to the prompt.

Clause S: The computer storage device of any of clauses O to R, the operations further comprising: receiving user input identifying another role definition, the other role definition includes another action and does not include effective permissions text; and submitting another prompt to the LLM, the other prompt including the other role definition and other query text that describes a question referencing the other role.

Clause T: The computer storage device of any of clauses O to S, wherein the role definition further includes an allowed action and a prohibited action.

Alternatively, or in addition to the other examples described herein, examples include any combination of the following:
- creating a prompt for a large language model (LLM);
- a prompt that includes a first role definition for a role;
- a prompt that includes a list of action definitions;
- a role definition that includes a first action and effective permissions text describing a summary of permission limitations provided by the role;
- actions in a list of action definitions being provided in a hierarchical format;
- a list of action definitions that includes a first action;
- a prompt that includes query text;
- query text represents a question about effective permissions associated with the role;
- creating a prompt for a large language model (LLM), the prompt including (A) a first role definition for a role of a role-based access control system and (B) a list of action definitions, the first role definition for the role including a first action and effective permissions text describing a summary of permission limitations provided by the role, each action in the list of action definitions being provided in a hierarchical format, the list of action definitions including the first action;
- a list of action definitions includes an action represented in a hierarchical format;
- a list of action definitions defines an action in a hierarchical format;
- adding query text to a prompt that includes a question about effective permissions associated with the role;
- submitting a prompt to the LLM, thereby generating response text from the LLM;
- receiving response text from an LLM;
- causing the response text to be displayed to a user;
- displaying response text on a user computing device;
- a role-based access control system;
- receiving user input identifying a security principal and a target resource;
- creating the query text by populating a preconfigured query text template with the security principal and the target resource;
- a hierarchical format of a list of actions that includes at least a resource type portion and an action verb portion, wherein the first action identifies a first resource type and a first action verb;
- a hierarchical format of the list of actions that also includes one or more of a company identifier portion and a service portion;
- storing a plurality of example role definitions including the first role definition;
- example role definitions that include one or more permitted actions from the list of action definitions and associated effective permissions text;
- creating a prompt includes adding the plurality of example role definitions to the prompt;
- a role definition that includes a list of permitted actions;
- a role definition that includes a list of prohibited actions;
- a role definition that includes a list of permitted data actions;
- a role definition that includes a list of prohibited data actions;
- receiving user input identifying another role definition, the other role definition includes a second action and does not include effective permissions text;
- submitting a second prompt to the LLM, the second prompt including the other role definition and second query text that describes a question referencing the other role;
- the first role definition further includes a list of allowed actions and a list of prohibited actions;
- receiving, from the role-based access control system, the list of action definitions;
- receiving, via a GUI, a user selection identifying a security principal and a target resource;
- determining, by a processor, LLM response output generated by an LLM in response to an LLM prompt that includes a first role definition for a role of a role-based access control system and a list of action definitions, the first role definition for the role including a first action and effective permissions text describing a summary of permission limitations provided by the role, each action in the list of action definitions being provided in a hierarchical format, the list of action definitions including the first action; and
- automatically displaying the LLM response output on the GUI.

While the aspects of the disclosure have been described in terms of various examples with their associated operations, a person skilled in the art would appreciate that a combination of operations from any number of different examples is also within scope of the aspects of the disclosure.

### Example Operating Environment

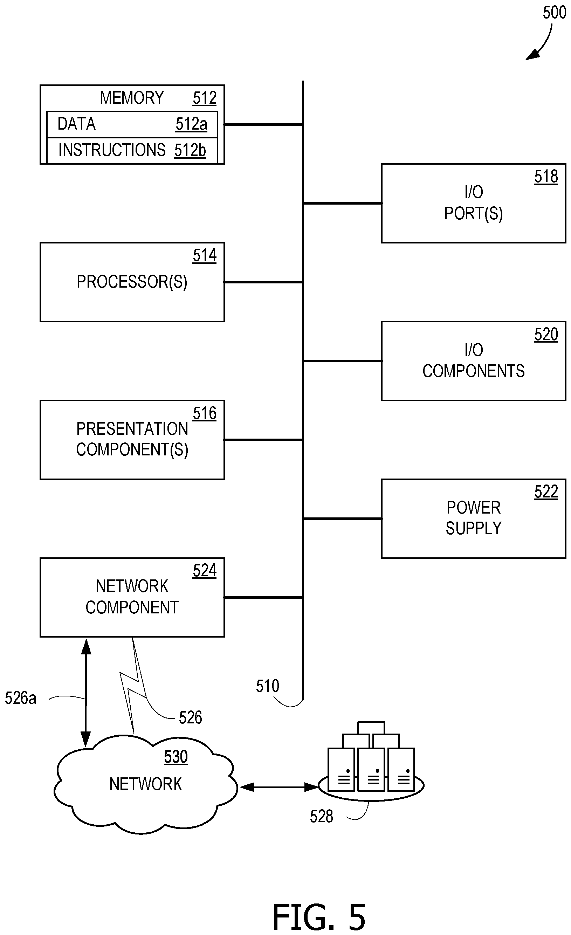

FIG. 5 is a block diagram of an example computing device 500 (e.g., a computer storage device) for implementing aspects disclosed herein and is designated generally as computing device 500. **In** some examples, one or more computing devices 500 are provided for an on-premises computing solution. **In** some examples, one or more computing devices 500 are provided as a cloud computing solution. **In** some examples, a combination of on-premises and cloud computing solutions are used. Computing device 500 is but one example of a suitable computing environment and is not intended to suggest any limitation as to the scope of use or functionality of the examples disclosed herein, whether used singly or as part of a larger set. Neither should computing device 500 be interpreted as having any dependency or requirement relating to any one or combination of components/modules illustrated.

The examples disclosed herein may be described in the general context of computer code or machine-useable instructions, including computer-executable instructions such as program components, being executed by a computer or other machine, such as a personal data assistant or other handheld device. Generally, program components including routines, programs, objects, components, data structures, and the like, refer to code that performs particular tasks, or implement particular abstract data types. The disclosed examples may be practiced in a variety of system configurations, including personal computers, laptops, smart phones, mobile tablets, hand-held devices, consumer electronics, specialty computing devices, etc. The disclosed examples may also be practiced in distributed computing environments when tasks are performed by remote-processing devices that are linked through a communications network.

Computing device 500 includes a bus 510 that directly or indirectly couples the following devices: computer storage memory 512, one or more processors 514, one or more presentation components 516, input/output (I/O) ports 518, I/O components 520, a power supply 522, and a network component 524. While computing device 500 is depicted as a seemingly single device, multiple computing devices 500 may work together and share the depicted device resources. For example, memory 512 may be distributed across multiple devices, and processor(s) 514 may be housed with different devices.

Bus 510 represents what may be one or more busses (such as an address bus, data bus, or a combination thereof). Although the various blocks of FIG. 5 are shown with lines for the sake of clarity, delineating various components may be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 5 and the references herein to a "computing device." Memory 512 may take the form of the computer storage media referenced below and operatively provide storage of computer-readable instructions, data structures, program modules and other data for the computing device 500. In some examples, memory 512 stores one or more of an operating system, a universal application platform, or other program modules and program data. Memory 512 is thus able to store and access data 512a and instructions 512b that are executable by processor 514 and configured to carry out the various operations disclosed herein.

In some examples, memory 512 includes computer storage media. Memory 512 may include any quantity of memory associated with or accessible by the computing device 500. Memory 512 may be internal to the computing device 500 (as shown in FIG. 5), external to the computing device 500 (not shown), or both (not shown). Additionally, or alternatively, the memory 512 may be distributed across multiple computing devices 500, for example, in a virtualized environment in which instruction processing is carried out on multiple computing devices 500. For the purposes of this disclosure, "computer storage media," "computer-storage memory," "memory," and "memory devices" are synonymous terms for the computer-storage memory 512, and none of these terms include carrier waves or propagating signaling.

Processor(s) 514 may include any quantity of processing units that read data from various entities, such as memory 512 or I/O components 520. Specifically, processor(s) 514 are programmed to execute computer-executable instructions for implementing aspects of the disclosure. The instructions may be performed by the processor, by multiple processors within the computing device 500, or by a processor external to the client computing device 500. **In** some examples, the processor(s) 514 are programmed to execute instructions such as those illustrated in the flow charts discussed below and depicted in the accompanying drawings. Moreover, in some examples, the processor(s) 514 represent an implementation of analog techniques to perform the operations described herein. For example, the operations may be performed by an analog client computing device 500 and/or a digital client computing device 500. Presentation component(s) 516 present data indications to a user or other device. Exemplary presentation components include a display device, speaker, printing component, vibrating component, etc. One skilled in the art will understand and appreciate that computer data may be presented in a number of ways, such as visually in a graphical user interface (GUI), audibly through speakers, wirelessly between computing devices 500, across a wired connection, or in other ways. I/O ports 518 allow computing device 500 to be logically coupled to other devices including I/O components 520, some of which may be built in. Example I/O components 520 include, for example but without limitation, a microphone, joystick, game pad, satellite dish, scanner, printer, wireless device, etc.

Computing device 500 may operate in a networked environment via the network component 524 using logical connections to one or more remote computers. **In** some examples, the network component 524 includes a network interface card and/or computer-executable instructions (e.g., a driver) for operating the network interface card. Communication between the computing device 500 and other devices may occur using any protocol or mechanism over any wired or wireless connection. **In** some examples, network component 524 is operable to communicate data over public, private, or hybrid (public and private) using a transfer protocol, between devices wirelessly using short range communication technologies (e.g., near-field communication (NFC), Bluetooth^{™} branded communications, or the like), or a combination thereof. Network component 524 communicates over wireless communication link 526 and/or a wired communication link 526a to a remote resource 528 (e.g., a cloud resource) across network 530. Various different examples of communication links 526 and 526a include a wireless connection, a wired connection, and/or a dedicated link, and in some examples, at least a portion is routed through the internet.

Although described in connection with an example computing device 500, examples of the disclosure are capable of implementation with numerous other general-purpose or special-purpose computing system environments, configurations, or devices. Examples of well-known computing systems, environments, and/or configurations that may be suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, virtual reality (VR) devices, augmented reality (AR) devices, mixed reality devices, holographic device, and the like. Such systems or devices may accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions or the specific components or modules illustrated in the figures and described herein. Other examples of the disclosure may include different computer-executable instructions or components having more or less functionality than illustrated and described herein. **In** examples involving a general-purpose computer, aspects of the disclosure transform the general-purpose computer into a special-purpose computing device when configured to execute the instructions described herein.

By way of example and not limitation, computer readable media comprise computer storage media and communication media. Computer storage media include volatile and nonvolatile, removable and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure are not signals. Exemplary computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that may be used to store information for access by a computing device. In contrast, communication media typically embody computer readable instructions, data structures, program modules, or the like in a modulated data signal such as a carrier wave or other transport mechanism and include any information delivery media.

The order of execution or performance of the operations in examples of the disclosure illustrated and described herein is not essential, and may be performed in different sequential manners in various examples. For example, it is contemplated that executing or performing a particular operation before, contemporaneously with, or after another operation is within the scope of aspects of the disclosure. When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. A permissions analytics system (100) for analyzing effective permissions, the permissions analytics system (100) comprising:
a processor (514); and
a computer-readable medium storing instructions that are operative upon execution by the processor to:
create (312) a prompt (152) for a large language model (LLM) (150), the prompt (152) including (A) a role definition (222) for a role of a role-based access control system and (B) action definitions (115),
the role definition (222) for the role including an action and effective permissions text describing a summary of permission limitations provided by the role,
the action definitions (115) being in a hierarchical format and including the action;
append (320), onto the prompt (152), query text that describes a question referencing the role;
submit (330) the prompt (152) to the LLM (150) to generate response text (108) from the LLM (150).

2. The permissions analytics system of claim 1, wherein the instructions are further operative to:
receive user input identifying a security principal and a target resource; and
create the query text by populating a preconfigured query text template with the security principal and the target resource.

3. The permissions analytics system of any of claims 1-2, wherein the hierarchical format of the action definitions includes a resource type portion and an action verb portion, wherein the action identifies a resource type and an action verb.

4. The permissions analytics system of any of claims 1-3, wherein the computer-readable medium further stores an example role definition including the role definition, the example role definition including a permitted action from the action definitions and associated effective permissions text, wherein creating the prompt further includes adding the example role definition to the prompt.

5. The permissions analytics system of any of claims 1-4, wherein the instructions are further operative to:
receive user input identifying another role definition, the other role definition includes another action and does not include effective permissions text; and
submit another prompt to the LLM, the other prompt including the other role definition and other query text that describes a question referencing the other role.

6. The permissions analytics system of any of claims 1-5, wherein the role definition further includes an allowed action and a prohibited action.

7. The permissions analytics system of any of claims 1-6, wherein the instructions are further operative to request, from the role-based access control system, the action definitions.

8. A computer-implemented method for analyzing effective permissions in a role-based access control system, the method comprising:
creating a prompt for a large language model (LLM), the prompt including (A) a role definition for a role of a role-based access control system and (B) action definitions,
the role definition for the role including an action and effective permissions text describing a summary of permission limitations provided by the role,
the action definitions being in a hierarchical format and including the action;
adding, to the prompt, query text that includes a question about effective permissions associated with the role; and
submitting the prompt to the LLM to generate response text.

9. The method of claim 8, further comprising:
receiving user input identifying a security principal and a target resource; and
creating the query text by populating a preconfigured query text template with the security principal and the target resource.

10. The method of any of claims 8-9, wherein the hierarchical format of the action definitions includes a resource type portion and an action verb portion, wherein the action identifies a resource type and an action verb.

11. The method of any of claims 8-10, further comprising storing an example role definition including the role definition, the example role definition including a permitted action from the action definitions and associated effective permissions text, wherein creating the prompt further includes adding the example role definition to the prompt.

12. The method of any of claims 8-11, further comprising:
receiving user input identifying another role definition, the other role definition includes another action and does not include effective permissions text; and
submitting another prompt to the LLM, the other prompt including the other role definition and other query text that describes a question referencing the other role.

13. The method of any of claims 8-12, wherein the role definition further includes an allowed action and a prohibited action.

14. The method of any of claims 8-13, further comprising receiving, from the role-based access control system, the action definitions.

15. A computer storage device having computer-executable instructions stored thereon, which, on execution by a computer, cause the computer to perform the method of any of claims 8 to 14.
